# EUROPÄISCHE PATENTSCHRIFT

(11) **EP 0 793 412 B1**
(45) Veröffentlichungstag und Bekanntmachung des Hinweises auf die Patenterteilung: **23.06.2004**
(21) Anmeldenummer: 96932545.5
(22) Anmeldetag: 17.09.1996
(51) Int. Cl.: A01F 12/40

(54) **STROHHÄCKSLER ZUM ZERKLEINERN VON HALMGUT HINTER DEN KORNABSCHEIDEEINRICHTUNGEN EINES MÄHDRESCHERS**
DEVICE FOR CHOPPING THE STALKS AFTER THE EARS OF CORN HAVE BEEN CUT OFF IN A COMBINE HARVESTER
HACHE-PAILLE POUR BROYER LA PAILLE DERRIERE LES DISPOSITIFS DE SEPARATION DES GRAINS D'UNE MOISSONNEUSE BATTEUSE

(30) Priorität: 25.09.1995 DE 19535175
(43) Veröffentlichungstag der Anmeldung: 10.09.1997
(60) Teilanmeldung: 04009450.0
(73) Patentinhaber: BISO B.V., NL-4707 BX Roosendaal (NL)
(72) Erfinder: JAKOBI, Wilhelm, D-88348 Saulgau (DE)
(74) Vertreter: Zinnecker, Armin, Dipl.-Ing.
(86) Internationale Anmeldenummer: PCT/EP1996/004066
(87) Internationale Veröffentlichungsnummer: WO 1997/011594

(56) Entgegenhaltungen:
- EP-A- 0 166 116
- EP-A- 0 479 329
- EP-A- 0 538 599
- BE-A- 558 601
- DE-A- 2 805 208
- FR-A- 2 479 648
- FR-A- 2 569 520
- US-A- 2 626 159
- US-A- 2 950 747
- US-A- 3 350 017

## Beschreibung

Gegenstand der Erfindung ist ein Strohhäcksler, der hinter den Kornabscheideeinrichtungen eines Mähdreschers angeordnet ist und dessen Trennorgane das von den Schüttlern herabfallende Halmgut in kurze Stücke zerteilen, die durch einen Verteilerkasten ausgetragen und verteilt über die Schnittbreite auf dem Boden abgelegt werden.

Strohhäcksler üblicher Bauart haben allgemein auf einem Trommelrohr frei beweglich gelagerte Schneidmesser, die das herabfallende Halmgut erfassen und gegen feststehende Gegenmesser schlagen. Dabei wird das Halmgut unter verbrauchen einer großen Leistung zerschlagen.

Des weiteren hat diese Konstruktionsweise den Nachteil, daß etwa in Längsrichtung über die Schüttler gehendes Halmgut nur unzulänglich zertrennt wird.

Das ist insofern schlecht, weil durch neue Züchtungen das Stroh immer kürzer und stabiler wird und deshalb in größerer Menge in Längsrichtung über die Schüttler geht.

Längeres Stroh in größerem Anteil wird hinter der Verteilerhaube jedoch nur unzureichend verteilt, es kann schlecht in den Ackerboden eingearbeitet werden und es verrottet schlecht.

Ein Strohhäcksler nach dem Oberbegriff des Anspruchs 1 ist aus der FR-A-2 479 648 bekannt.

Aus der EP-A-0 538 599 ist ein Anbauhäcksler für Mähdrescher bekannt, der eine Trommelbesitzt, an deren Umfang Messer schwenkbar angeordnet sind, die an ihrer Längsseite eine Schneide aufweisen. In den Messer-Umlaufkreis ragen feststehende Gegenmesser hinein.

Aus der EP-A-0 479 329 ist ein ähnlicher Anbauhäcksler für Mähdrescher mit schwenkbar angeordneten Messern bekannt.

Die US-A-26 26 159 offenbart einen Häcksler mit einer Häckslertrommel, an der Messer befestigt sind.

Die Aufgabe der Erfindung besteht darin, gegenüber bekannten Ausführungsarten den Leistungsbedarf des Strohhäckslers zu verringern, das ausgeschüttelte Stroh, egal ob es in Querlage oder in Längsrichtung vom Schüttler fällt, in gleichmäßige kurze Stücke zu schneiden und zerfasern und mit einem kräftigen Luftstrom über die ganze Schnittbreite auf dem Ackerboden gleichmäßig zu verteilen.

Dabei sollen im Halmgut mitgeführte Fremdkörper den Häcksler passieren ohne ihn zu beschädigen oder zu zerstören.

Erfindungsgemäß wird das dadurch erreicht, daß anstelle der üblichen, frei beweglich auf einem Trommelrohr gelagerten Häckselmessern auf einer Trommelwalze starr befestigte, an ihrer Stirnseite mit einer aggressiven, hinterschliffenen Verzahnung versehene Mitnehmer angebracht sind, die das zu trennende Halmgut erfassen und in einem relativ dünnen Halmgutschleier in einem ziehenden Scnnitt über am Häckselboden feststehende Häckselmesser mit scharfer Schneidkante ziehen, wobei das Halmgut mit relativ geringem Kraftaufwand zertrennt wird.

Die Breite der Mitnehmer entspricht dabei annähernd der Breite, auf die querliegendes Halmgut geschnitten werden soll.

Die Mitnehmer sind, gleichmäßig verteilt in einer beliebigen Anzahl Reihen, auf dem Umfang einer Trommelwalze spiralförmig angeordnet, wobei jeweils der erste Mitnehmer einer Reihe in Längsrichtung der Trommelwalze auf gleicher Höhe liegt wie der letzte Mitnehmer einer Reihe auf der gegenüber liegenden Seite.

Durch diese Bauweise durchläuft das Halmgut in einem relativ dünnen Schleier den Häcksler, wobei praktisch jeweils nur zwei Mitnehmer kraftschlüssig im Eingriff mit dem zu trennenden Halmgut sind, das durch die Häckselmesser getrennt wird.

Daraus resultiert ein konstantes, relativ geringes Drehmoment und dem entsprechend eine geringe konstante Leistungs-Anforderung.

Dabei können in einer Reihe Mitnehmer an Mitnehmer liegen mit jeweils einem Spalt dazwischen, durch den das feststehende Häckselmesser geht. Es kann in einer Reihe jedoch auch jeweils ein Mitnehmer ausgelassen werden, womit die Anzahl Schnitte und damit der Leistungsbedarf verringert wird.

Ein besonderer Vorteil der breiten Mitnehmer besteht noch darin, daß sie zunächst um den Trommelmantel einen kräftigen Wind erzeugen und dann durch die schaufelförmige Ausbildung das gehäckselte Halmgut sicher austragen.

Die feststehenden Häckselmesser sind paarweise an schwenkbaren Messerträgern befestigt, die an einem außerhalb des Häckselbodens liegenden, zu diesem etwa parallel verlaufenden Messerboden gelagert sind. Die Messerträger sind dabei mit Anschlägen versehen, die mittels Federn gegen den Messerboden gedrückt werden.

Die Häckselmesser selbst ragen durch Schlitze im Messerboden und im Häckselboden in den Häckselkasten hinein. Wird ein harter Fremdkörper von den Mitnehmern erfasst, weichen die Häckselmesser nach außen aus, womit der Fremdkörper die Schneideinrichtung passieren kann, ohne diese zu beschädigen. Der Messerboden kann mit den Messerträgern und den Häckselmessern als eine Einheit so weit zurückgeschwenkt werden, daß sich die Häckselmesser außerhalb des Häckselraumes befinden. Wird gleichzeitig der Verteilerkasten weggeschwenkt, ist es möglich, das Halmgut über die Häckseltrommel ungeschnitten im Schwad abzulegen. Dabei wird das Halmgut geknickt und zerfassert und eignet sich besser in der Weiterverwendung. Durch vorstehend aufgezeigte Querschneid-Einrichtung wird vorwiegend quer durch den Häcksler gehendes Halmgut getrennt.

Ein weiteres Merkmal der Erfindung ist, daß der Querschneid-Einrichtung eine Schneideinrichtung nachgeordnet ist, mittels derer in Längsrichtung durch den Häcksler gehendes Halmgut in kurze Stücke zertrennt wird. Dazu sind unterhalb der Häckselmesser am Häckselboden drehbar gelagerte Gegenschneidplatten angeordnet, die an ihrer Stirnseite hinterschliffen verzahnt sind, wobei die Verzahnung der Gegenschneidplatte mit der Verzahnung der Mitnehmerplatten im Profil übereinstimmt und in diese bis auf einen allseitig parallelen Abstand von weniger als 3mm hineinragt.

Dadurch werden Strohhalme, die der Länge nach durch den Häcksler gehen an der Stelle, an der eine Mitnehmerplatte eine Gegenschneidplatte passiert, getrennt und damit in der Länge gestückelt.

Diese Gegenleisten sind in der Breite über die Häckseltrommel in Segmente aufgeteilt, wobei jedes Segment einzeln gefedert im Eingriff zu den Mitnehmern gehalten wird. Passiert ein harter Fremdkörper den Häcksler, weichen diese Segmente entsprechend ihrer Breite nach hinten aus.

Damit das aus dem Verteilerkasten ausgetragene, zerkleinerte Halmgut sicher über die ganze Schnittbreite verteilt wird, sind an den beiden Enden der Trommelwalze, fest verbunden mit dieser, Radialgebläse angeordnet, die seitlich vom Häckselgehäuse Luft ansaugen und in den Verteilerkasten blasen.

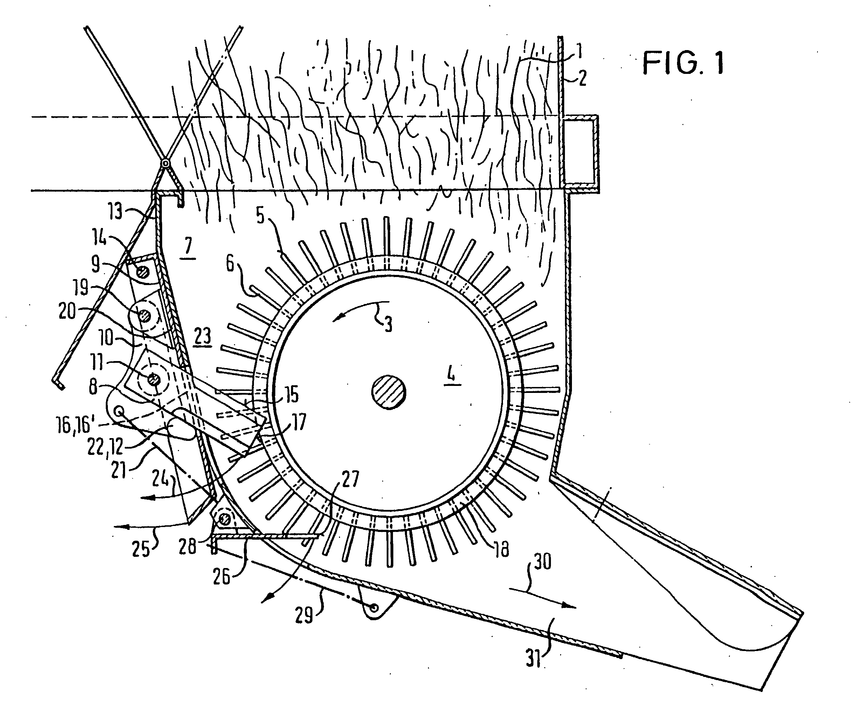

Die erfindungsgemäße Gestaltung ist in Fig. 1 bis 8 mit den zugehörigen Beschreibungen offen gelegt.

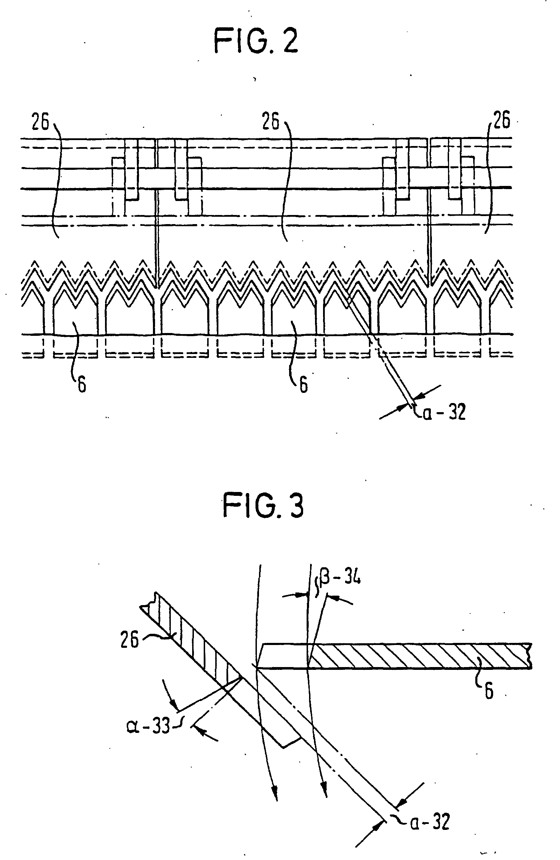

Dabei zeigt:
Fig.1
   einen Längsschnitt durch einen Strohhäcksler mit einer Halmgut-Querschneideeinrichtung und nachgeordneter Trenneinrichtung für längsgerichtet durch den Häcksler gehendes Halmgut mittels Gegenschneidplatten,
Fig. 2
   eine Draufsicht auf die Trenneinrichtung nach Fig. 2,
Fig. 3
   wie die Schneidplatten und die Gegenleisten hinterschnitten sind,
Fig. 4
   einen Längsschnitt durch die Häckseltrommel, aus dem die Anordnung der Mitnehmerplatten sowie der Axialgläse ersichtlich ist,
Fig. 5
   einen Querschnitt durch die Häckseltrommel, aus dem die Zuordnung der Mitnehmerplatten zueinander ersichtlich ist.
Fig. 6
   einen Querschnitt durch ein Axialgebläse.
Fig. 7
   eine Ansicht auf die Messerträger,
Fig. 8
   eine Ansicht auf die Mitnehmerplatten.

Fig. 1 zeigt einen Querschnitt durch einen Strohhäcksler, bei dem der Halmgut-Querschneideinrichtung eine unterhalb dieser liegende Halm-Längsschneideeinrichtung angeordnet ist.

Dabei fällt das zu häckselnde Halmgut (1) aus einer Strohauslauf-Haube (2) auf die sich in Pfeilrichtung (3) drehende Häckseltrommel (4). Dabei wird das Halmgut von an der Stirnseite (5) hinterschliffen gezahnten Mitnehmerplatten (6) erfasst und in den Einlaufraum (7) gefördert. Die Mitnehmerplatten ziehen das Halmgut von hier über Häckselmesser (8), die an der Außenseite eines Messerbodens (9) auf Trägem (10) mittels Schrauben (11) paarweise starr befestigt und nach unten durch Anschläge (12) begrenzt sind.

Der Messerboden (9) ist am Häckslerboden (13) in Lagern (14) schwenkbar gelagert.

Die Häckselmesser ragen mit ihrem vorderen Ende, das eine scharfe Schneidkante (15) hat. durch Schlitze (16), (16') im Messerboden (9) und im Häckselboden (13) zwischen jeweils zwei Mitnehmerplatten (6) mit ihrem vorderen Ende (17) bis an den äußeren Durchmesser der Trommelwalze (18).

Die Träger (10) sind auf Bolzen (19) gelagert. die wiederum in Lagerplatten (20) gelagert sind. Dabei werden die Träger durch Federzug (21) bis zu einem Anschlag (22) nach unten gezogen, wobei der in den Häckselraum (23) zwischen die Mitnehmerplatten ragende Teil der Häckselmesser nach oben gedrückt wird. Gelangt ein näher nicht dargestellter harter Fremdkörper in den Einlaufraum (7) und wird dort von den Mitnehmerplatten erfasst, weichen die Häckselmesser nach hinten in Pfeilrichtung (24) aus. Unabhängig hiervon kann der Messerboden (9) mit sämtlichen. Häckselmessern um den Schwenkpunkt (14) in Pfeilrichtung (25) ausweichen.

Unterhalb der Häckselmesser sind am Häckselboden (13) Gegenschneidplatten (26) angeordnet, die an ihrer Stirnseite (27) hinterschliffen verzahnt sind, wobei die Verzahnung im Profil mit der Verzahnung an der Stirnseite der Mitnehmerplatte übereinstimmt und beide Verzahnungen bis auf einen allseitig parallelen Abstand von weniger als 3mm übereinstimmen. Die Gegenschneidplatten sind auf Bolzen (28) schwenkbar gelagert und werden mittels Federzug (29) gegen einen näher nicht dargestellten, einstellbaren Anschlag gedrückt. Die Gegenschneidplatten sind in mehrere Segmente aufgeteilt, von denen jedes einzeln beim Auftreffen eines harten Fremdkörpers für sich ausweichen kann.

Das in Querrichtung und in Längsrichtung gehäckselte Halmgut wird dann in Pfeilrichtung (30) nach hinten aus der Verteilerhaube (31) ausgetragen.

Fig. 2 zeigt eine Ansicht auf die Gegenschneidplatten (26) im Eingriff mit den Mitnehmerplatten (6). Dabei ist die segmentmäßige Aufteilung der Gegenschneidplatten und die profilmäßige Übereinstimmung von Mitnehmerplatte und Gegenschneidplatte ersichtlich. Dabei greifen die Stirnseiten (5), (27), von Gegenschneidplatte und Mitnehmerplatte zahnförmig parallel ineinander in einem Abstand a (32) kleiner als 3mm.

Fig. 3 zeigt die Hinterschnitt-Winkel a(33) und β (34) von Mitnehmerplatten und Gegenschneidplatten. Die Hinterschnitt-Winkel sind dabei größer 3 Grad. Beide Winkel sind je nach Bedarf gleich groß oder unterschiedlich.

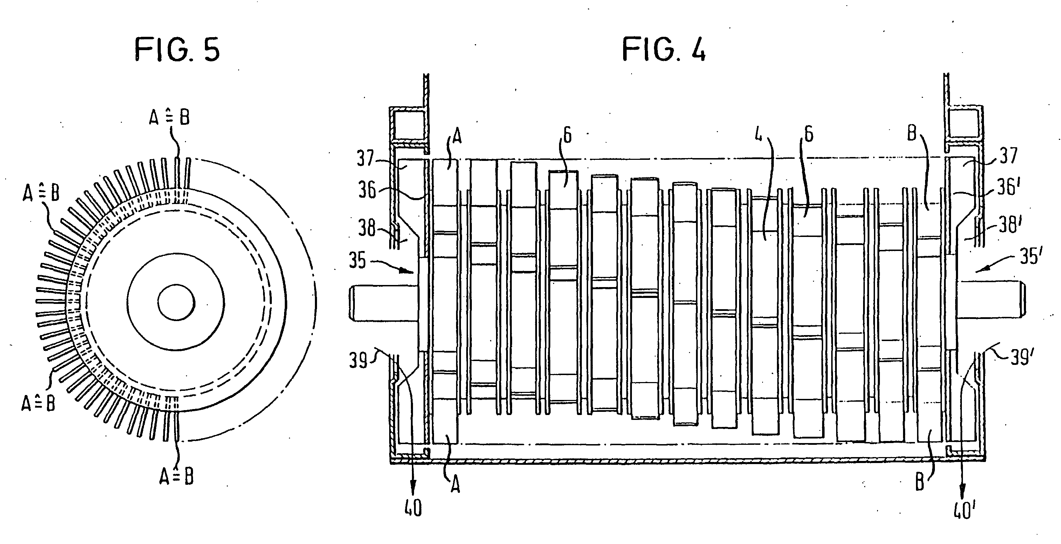

Fig. 4 zeigt einen Längsschnitt durch die Häckseltrommel (4), aus dem die Anordnung der Mitnehmerplatten (6) ersichtlich ist. An beiden Enden der Häckseltrommel (4) sind je ein Axialgebläse (35), (35') angeordnet. Dabei sind auf mit den Stirnseiten des Trommelmantels verbundenen Platten (36), (36') eine beliebige Anzahl Lüfterflügel (37) angeordnet. Die durch eine Öffnung (38), (38') angesaugte Luft (39) wird in Pfeilrichtung (40), (41') in die Verteilerhaube (31) geblasen.

Fig. 5 zeigt die Anordnung der Mitnehmerplatten-Reihen (6) in ihrem schraubenförmigen Verlauf auf dem Trommelmantel. Dabei ist dargestellt, daß jeweils die erste, mit "A" bezeichnete Mitnehmerplatte (6) einer Reihe am Umfang die gleiche WinkelLage hat wie die letzte, mit "B" bezeichnete Mitnehmerplatte der folgenden oder der vorausgehenden Reihe.

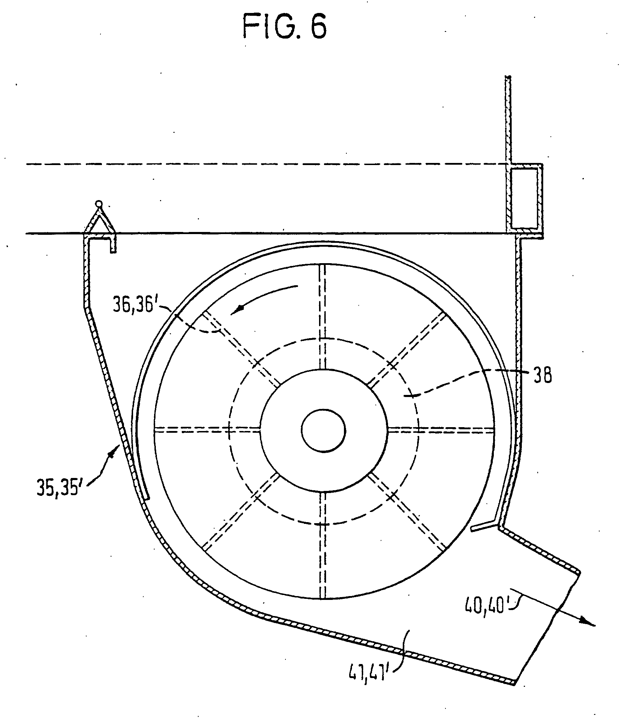

Fig. 6 zeigt einen Querschnitt durch ein Axialgebläse (35, 35'). Dabei wird die über eine Öffnung (38) im Zentrum der Gebläse durch die Lüfterflügel (36), (36') von außerhalb des Häckselkastens angesaugte Luft über einen Austrag (41), (41') in Pfeilrichtung (40), (40') in den Verteilerkasten abgegeben.

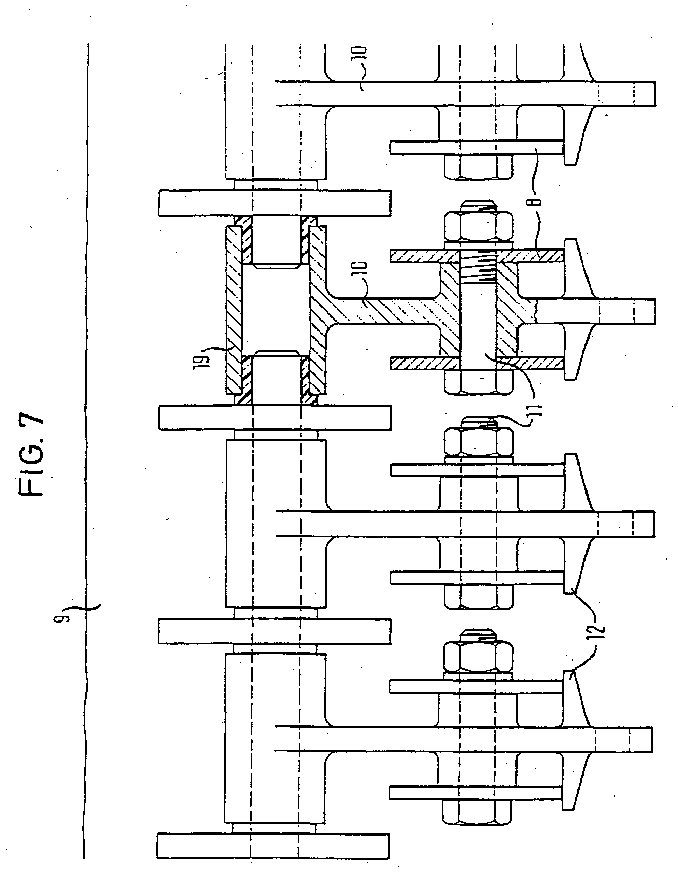

Fig. 7 zeigt eine Ansicht mit einer beispielweisen Gestaltung der Halmgut-Querschneideinrichtung von außerhalb auf den Messerboden (9) in größerem Maßstab. Dabei sind beispielsweise dargestellt die Träger 10, auf denen mittels Schrauben 11 die Häckselmesser (8) starr befestigt sind. Dabei werden die Häckselmesser nach unten durch Anschläge (12) begrenzt. Die Träger (10) wiederum sind auf Bolzen (19) gelagert.

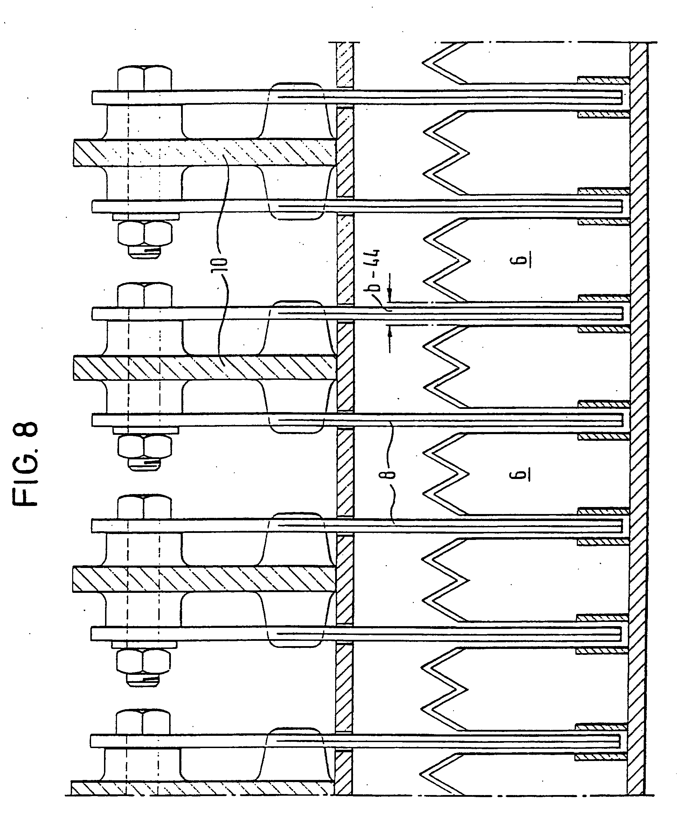

Fig. 8 zeigt eine Draufsicht auf ein beliebiges Segment der Halmgut-Querschneideinrichtung, wobei in vergrößertem Maßstab das Zusammenwirken von Mitnehmerplatten (6) und Häckselmessem (8) dargestellt ist. Dabei ist ersichtlich, wie die Häckselmesser im Spalt b (44) zwischen jeweils nebeneinander liegenden Mitnehmerplatten angeordnet sind.

## Patentansprüche

1. Strohhäcksler zum Zerkleinern von Halmgut hinter der Kornabscheideeinrichtung eines Mähdreschers, mit
einer Häckseltrommel (4), die in einem Häckslergehäuse mit einem Häckslerboden (13) gelagert ist, an dem Häckselmesser (8) angebracht sind,
und einer Verteilerhaube (31) zum Austragen des gehäckselten Halmguts,
wobei auf dem Trommelmantel der Häckseltrommel (4) starr befestigte, das Halmgut über die Häckselmesser (8) ziehende Mitnehmerplatten (6) angebracht sind, deren Breite annähernd der Breite entspricht, auf die querliegendes Halmgut geschnitten werden soll, und wobei im Zusammenwirken der Mitnehmerplatten (6) mit den Häckselmessern (8) eine Querhäckseleinheit besteht,
**dadurch gehennzeichnet,**
**daß** am Häckselboden (13) Gegenschneidplatten (26) angeordnet sind,
wobei die Gegenschneidplatten (26) dieser Querhäckseleinheit (6, 8) zum Trennen von Halmgut, das längsgerichtet durch den Häcksler geht, nachgeordnet sind.

2. Strohhäcksler nach Anspruch 1, **dadurch gekennzeichnet, daß** die Mitnehmerplatten (6) auf dem Mantel der Häckseltrommel (4) in mehreren Reihen quer über die Breite der Häckseltrommel angeordnet sind.

3. Strohhäcksler nach Anspruch 1 oder 2, **dadurch gekennzeichnet, daß** die Mitnehmerplatten (6) an der Stirnseite gezahnt sind.

4. , Strohhäcksler nach einem der vorhergehenden Ansprüche, **dadurch gekennzeichnet, daß** die Mitnehmerplatten (6) mindestens 25 mm breit sind und einen Zwischenraum-Abstand von mindestens 6 mm aufweisen.

5. Strohhäcksler nach einem der vorhergehenden Ansprüche, **dadurch gekennzeichnet, daß** um den Umkreis der Spitzen der Mitnehmer (6) bzw. Mitnehmerplatten auf einer Seite ein bogenförmiger Häckslerboden (13) angeordnet ist, auf dessen Außenseite Häckselmesser (8) befestigt sind, die durch Schlitze (16, 16') im Häckslerboden (13) nach innen bis auf ca. 5 mm an den Mantel der Häckseltrommel (4) zwischen die Mitnehmer (6) bzw. Mitnehmerplatten reichen.

6. Strohhäcksler nach einem der vorhergehenden Ansprüche, **dadurch gekennzeichnet, daß** die vorzugsweise gezahnten Mitnehmerplatten (6) lösbar aufgeschraubt sind.

7. Strohhäcksler nach einem der vorhergehenden Ansprüche, **dadurch gekennzeichnet, daß** die Häckselmesser (8) auf einer Messerplatte (20) befestigt sind, die etwa parallel zum Häckslerboden (13) verläuft.

8. Strohhäcksler nach Anspruch 7, **dadurch gekennzeichnet, daß** die Messerplatte (20) am Häckslerboden (13) in Lagern (14) schwenkbar aufgehängt ist und Schlitze (16, 16') hat, durch die die Häckselmesser (8) durch den Häckslerboden (13) in den Häcksler ragen.

9. Strohhäcksler nach einem der vorhergehenden Ansprüche, **dadurch gekennzeichnet, daß** die Häckselmesser (8) auf der Messerplatte (20) auf Messerträgern (10) befestigt sind, die in Lagern (19) schwenkbar sind.

10. Strohhäcksler nach einem der vorhergehenden Ansprüche, **dadurch gekennzeichnet, daß** die Häckselmesser (8) paarweise auf einem Messerträger (10) befestigt sind.

11. Strohhäcksler nach einem der vorhergehenden Ansprüche, **dadurch gekennzeichnet, daß** die Häckselmesser (8) um einen Winkel größer 10 Grad zur Waagrechten, von außen nach innen nach unten verlaufend, angeordnet sind.

12. Strohhäcksler nach einem der vorhergehenden Ansprüche, **dadurch gekennzeichnet, daß** die Messerträger (10) durch Federzug (21) gegen einen Anschlag gegen den Messerboden (13) gezogen werden.

13. Strohhäcksler nach einem der vorhergehenden Ansprüche, **dadurch gekennzeichnet, daß** die Gegenschneidplatten (26) unterhalb der Schneidmesser (8) am Häckselboden (13) angeordnet sind.

14. Strohhäcksler nach Anspruch 13, **dadurch gekennzeichnet, daß** die Gegenschneidplatten (26) an ihrer Stirnseite gezahnt sind und daß sie im Häckselraum mit ihrer Verzahnung in die Verzahnung der Mitnehmer (6) hineinreichen, wobei beide Verzahnungen profilmäßig derart übereinstimmen, daß allseitig ein paralleler Abstand kleiner 3 mm vorhanden ist.

15. Strohhäcksler nach einem der vorhergehenden Ansprüche, **dadurch gekennzeichnet, daß** die Gegenschneidplatten (26) über die Breite der Häckseltrommel (4) in Segmente aufgeteilt sind, wobei jedes einzelne Segment in einem Lager geschwenkt werden kann.

16. Strohhäcksler nach Anspruch 15, **dadurch gekennzeichnet, daß** die Segmente mittels Federzügen voneinander unabhängig, begrenzt durch einen Anschlag, in den Häckselraum gezogen werden.

17. Strohhäcksler nach einem der vorhergehenden Ansprüche, **dadurch gekennzeichnet, daß** an beiden Enden der Häckseltrommel (4) mit dieser verbundene Axialgebläse angeordnet sind.

18. Strohhäcksler nach Anspruch 17, **dadurch gekennzeichnet, daß** die beiden Axialgebläse Luft von außerhalb des Häckselkastens ansaugen und in die Verteilerhaube (31) blasen.

## Claims

1. A straw chopper for chopping stalks after the corn cutting apparatus of a combine harvester, comprising
a chopping drum (4) which is supported in a chopper housing with a chopper base (13) to which chopping blades (8) are attached;
and a distribution hood (31) to discharge the chopped stalks,
wherein rigidly secured driver plates (6), whose width approximately corresponds to the width to which the transversely lying stalks are to be cut, are attached to the drum jacket of the chopping drum (4) and pull the stalks over the chopping blades (8), and wherein a transverse chopping unit arises in the interaction of the driver plates (6) with the chopping blades (8),
**characterised in that** counter-cutting plates (26) are arranged at the chopper base (13),
wherein, for the cutting of stalks passing through the chopper in longitudinal alignment, the counter-cutting plates (26) are arranged after said transverse chopping unit (6, 8).

2. A straw chopper in accordance with claim 1, wherein the driver plates (6) are arranged in several rows transversely over the width of the chopping drum on the jacket of the chopping drum (4).

3. A straw chopper in accordance with either of claims 1 or 2, wherein the driver plates (6) have teeth at the end face.

4. A straw chopper in accordance with any of the preceding claims, wherein the driver plates (6) are at least 25 mm wide and have an intermediate space distance of at least 6 mm.

5. A straw chopper in accordance with any of the preceding claims, wherein an arc-shaped chopper base (13) is arranged on one side around the periphery of the tips of the drivers (6) or of the driver plates and chopping blades (8) are arranged at its outer side which extend inwardly between the drivers (6) or the driver plates through slots (16, 16') in the chopper base (13) up to approximately 5 mm from the jacket of the chopping drum (4).

6. A straw chopper in accordance with any of the preceding claims, wherein the driver plates (6) which preferably have teeth are releasably screwed on.

7. A straw chopper in accordance with any of the preceding claims, wherein the chopping blades (8) are secured to a blade plate (20) which extends approximately parallel to the chopper base (13).

8. A straw chopper in accordance with claim 7, wherein the blade plate (20) is pivotably suspended in bearings (14) at the chopper base (13) and has slots (16, 16') through which the chopping blades (8) project through the chopper base (13) into the chopper.

9. A straw chopper in accordance with any of the preceding claims, wherein the chopper blades (8) are secured to the blade plate (20) on blade supports (10) which are pivotable in bearings (19).

10. A straw chopper in accordance with any of the preceding claims, wherein the chopping blades (8) are secured to a blade support (10) in pairs.

11. A straw chopper in accordance with any of the preceding claims, wherein the chopping blades (8) are arranged extending from the outside downwardly to the inside at an angle larger than 10 degrees to the horizontal.

12. A straw chopper in accordance with any of the preceding claims, wherein the blade supports (10) are pulled toward an abutment toward the blade base (13) by a spring tensioner (21).

13. A straw chopper in accordance with any of the preceding claims, wherein the counter-cutting plates (26) are arranged beneath the cutting blades (8) at the chopper base (13).

14. A straw chopper in accordance with claim 13, wherein the counter-cutting plates (26) have teeth at their end face and wherein their toothed arrangement projects into the toothed arrangement of the drivers (6) in the chopping space, with both toothed arrangements coinciding with respect to their profiles such that a parallel spacing of less than 3 mm is present at all sides.

15. A straw chopper in accordance with any of the preceding claims, wherein the counter-cutting plates (26) are divided into segments over the width of the chopping drum (4), with ever single segment being able to be pivoted in a bearing.

16. A straw chopper in accordance with claim 15, wherein the segments are pulled into the chopping space, bounded by an abutment, independently of one another by means of spring tensioners.

17. A straw chopper in accordance with any of the preceding claims, wherein axial blowers are arranged at both ends of the chopping drum (4) and are connected to it.

18. A straw chopper in accordance with claim 17, wherein the two axial blowers suck in air from outside the chopping box and blow it into the distributor hood (31 ).

## Revendications

1. Hache-paille pour le broyage de paille derrière le dispositif de séparation de grains d'une moissonneuse-batteuse, comprenant
un tambour de hachoir (4), qui est logé dans un boîtier de hachoir avec un fond de hachoir (13), sur lequel sont disposés des couteaux de hachoir (8),
et un capot de distribution (31) pour l'évacuation de la paille hachée,
des plaques d'entraîneur (6) fixées de façon rigide et tirant la paille au moyen des couteaux du hachoir (8) étant disposées sur l'enveloppe du tambour du hachoir (4), plaques dont la largeur correspond à peu près à la largeur à laquelle la paille disposée en travers doit être coupée, et une unité de hachage transversal consistant dans l'action conjuguée des plaques d'entraîneur (6) avec les couteaux du hachoir (8), et **caractérisé en ce que** des contre-plaques de coupe (26) sont disposées sur le fond du hachoir (13),
les contre-plaques de coupe (26) de cette unité de hachage transversal (6, 8) étant disposées en aval de cette unité de hachage transversal (6, 8) pour la séparation de la paille, qui passe à travers le hachoir avec une orientation longitudinale.

2. Hache-paille selon la revendication 1, **caractérisé en ce que** les plaques d'entraîneur (6) sont disposées sur l'enveloppe du tambour du hachoir (4) dans plusieurs rangées transversalement à la largeur du tambour du hachoir.

3. Hache-paille selon la revendication 1 ou 2, **caractérisé en ce que** les plaques d'entraîneur (6) sont dentées sur le côté avant.

4. Hache-paille selon l'une quelconque des revendications précédentes, **caractérisé en ce que** les plaques d'entraîneur (6) sont d'une largeur d'au moins 25 mm et présentent un espacement intermédiaire d'au moins 6 mm.

5. Hache-paille selon l'une quelconque des revendications précédentes,
**caractérisé en ce que**
autour du pourtour des extrémités des entraîneurs (6) ou des plaques d'entraîneur est disposé sur un côté un fond de hachoir (13) en forme d'arc, sur le côté extérieur duquel sont fixés des couteaux du hachoir (8) qui passent à travers des fentes (16, 16') dans le fond du hachoir (13) et vont vers l'intérieur jusqu'à environ 5 mm sur l'enveloppe du tambour du hachoir (4) entre les entraîneurs ou les plaques d'entraîneur.

6. Hache-paille selon l'une quelconque des revendications précédentes, **caractérisé en ce que** les plaques d'entraîneur (6) de préférence dentées sont vissées dessus de façon amovible.

7. Hache-paille selon l'une quelconque des revendications précédentes, **caractérisé en ce que** les couteaux du hachoir (8) sont fixés sur une plaque de couteau (20) qui est à peu près parallèle au fond du hachoir (13).

8. Hache-paille selon la revendication 7, **caractérisé en ce que** la plaque de couteau (20) est suspendue sur le fond du hachoir (13) de façon pivotante dans des paliers (14) et présente des fentes (16, 16') par lesquelles les couteaux du hachoir (8) dépassent à travers le fond du hachoir (13) dans le hachoir.

9. Hache-paille selon l'une quelconque des revendications précédentes, **caractérisé en ce que** les couteaux du hachoir (8) sont fixés sur la plaque de couteau (20) sur des supports de couteaux (10) qui peuvent pivoter dans des paliers (19).

10. Hache-paille selon l'une quelconque des revendications précédentes, **caractérisé en ce que** les couteaux du hachoir (8) sont fixés par paires sur un support de couteau (10).

11. Hache-paille selon l'une quelconque des revendications précédentes, **caractérisé en ce que** les couteaux du hachoir (8) sont disposés autour d'un angle supérieur à 10 degrés par rapport à l'horizontale, agencés de l'extérieur vers l'intérieur vers le bas.

12. Hache-paille selon l'une quelconque des revendications précédentes, **caractérisé en ce que** les supports de couteaux (10) sont tirés par une traction de ressort (21) contre une butée vers le fond de couteau (13).

13. Hache-paille selon l'une quelconque des revendications précédentes, **caractérisé en ce que** les contre-plaques de coupe (26) sont disposées au-dessous des couteaux de coupe (8) sur le fond du hachoir (13).

14. Hache-paille selon la revendication 13, **caractérisé en ce que** les contre-plaques de coupe (26) sont dentées sur leur côté avant et **en ce qu'**elles dépassent dans l'espace du hachoir avec leur denture dans la denture des entraîneurs (6), les deux dentures coïncidant au niveau du profil de telle sorte qu'on a de tous côtés un espacement parallèle inférieur à 3 mm.

15. Hache-paille selon l'une quelconque des revendications précédentes, **caractérisé en ce que** les contre-plaques de coupe (26) sont divisées sur la largeur du tambour du hachoir (4) en segments, chaque segment individuel pouvant être basculé dans un palier.

16. Hache-paille selon la revendication 15, **caractérisé en ce que** les segments sont tirés dans l'espace du hachoir au moyen de tractions de ressort indépendamment les uns des autres, délimités par une butée.

17. Hache-paille selon l'une quelconque des revendications précédentes, **caractérisé en ce que** des souffleries axiales reliées au tambour du hachoir sont disposées sur les deux extrémités du tambour du hachoir (4).

18. Hache-paille selon la revendication 17, **caractérisé en ce que** les deux souffleries axiales aspirent de l'air par l'extérieur de la caisse du hachoir et l'insufflent dans le capot de distribution (31).
